# EUROPEAN PATENT APPLICATION

(11) **EP 4 663 674 A1**
(43) Date of publication of application: **17.12.2025**
(21) Application number: 24182078.6
(22) Date of filing: 13.06.2024
(51) Int. Cl.: C08G 18/10, C08G 18/48, C08G 65/336, C08L 71/02, C08L 101/10, C09J 171/02

(54) **CURABLE SILANE-TERMINATED POLYMER COMPOSITION WITH REACTIVE PLASTICIZER**

(71) Applicant: Sika Technology AG, 6340 Baar (CH)
(72) Inventor: HAYASHI, Yuki, Fujisawa, 251-0056 (JP)
(74) Representative: Sika Patent Attorneys

(57) **Abstract**

The invention relates to curable compositions based on silane-terminated polymers (STP) comprising at least one organic polymer P having on average between 1.5 to 3 reactive silane groups selected from methyl dimethoxy silyl or triethoxy silyl and at least one reactive plasticizer RP having on average between 0.3 to 1.5 reactive silane groups selected from methyl dimethoxy silyl and at least one filler F and at least one catalyst C.

The curable STP composition of the invention can be formulated to reduce or completely omit the necessary amount of common, in particular phthalate-based plasticizers, lower the viscosity and improve the mechanical and application properties of the sealant. The inventive composition also shows improved stability upon heat treatment compared to state-of-the-art references.

Furthermore, the invention relates to the use of the curable STP composition as a sealant or adhesive, in particular as an industrial sealant or construction sealant. Also, the invention relates to objects, in particular to buildings or a part of a building built with the curable STP composition.

## Description

### Technical Field

The invention relates to curable compositions based on silane-terminated polymers with reactive plasticizers and their use as adhesives and construction sealants.

### Prior Art

Curable compositions based on polymers containing reactive silane groups play an important role in many applications, for example as adhesives, sealants or coatings. Polymers containing reactive silane groups are in particular organic polymers containing reactive silane groups, which are also referred to as "silane-functional polymers", "silane-modified polymers" (SMP) or "silane-terminated polymers" (STP). Compositions containing these polymers harden via crosslinking reaction of the reactive silane groups on the polymers, which hydrolyze under the influence of moisture, condense with one another as silanol groups and thus form a covalently bonded network and, macroscopically, a cured material. Advantages of silane-functional organic polymers commonly are improved adhesive properties and compatibility with substrate materials.

Curable compositions based on polymers containing reactive silane groups are often used as a sealant, especially as an industrial sealant or construction sealant. Such sealants contain different components depending on the field of use and on the requirements imposed on them, at application and after curing. Plasticizers are one of the commonly used additives in adhesives and sealants formulations. They improve the performance by creating much-needed flexibility, optimizing viscosity and also improving mechanical performance. This is especially true for low-modulus sealants used in construction industry. Apart from adhesive properties and a moderate Shore A hardness, construction sealants commonly require a low modulus of elasticity in order to be able to accommodate substrate movements, for example arising from thermal expansion or contraction effected by temperature changes.

Most common plasticizers used in such sealants are phthalates, based on esters of phthalic acid. Phthalate-containing plasticizers are considered to be a health hazard and, on the basis of official regulations for example in Europe, are being scrutinized and might be banned in the future from increasing numbers of products. Furthermore, these and other small molecule plasticizers tend to migrate to the surface, even after curing of the sealant, and can potentially lead to defects or aesthetic degradation in the cured material or the substrate it is in contact with, so-called bleeding. Not only does this bleeding cause the surface of the cured composition to attract dirt and become visibly defected, but also the sealant's mechanical performance may be negatively impacted, for example by causing embrittlement or loss of adhesion.

To reduce the amount of migratable conventional plasticizers such as phthalates, a need exists to find alternative plasticizers for low-modulus sealants. A potential solution to this problem are reactive plasticizers that contain chemical functionalities to incorporate them within the chemical network of the cured material but still is able to plasticize the composition after curing. Since such a reactive plasticizer can react with the polymer and form a permanent bond, it will be chemically locked in place, which prevents migration. The reactive plasticizer could potentially not only replace conventional plasticizers, but also add new properties to the material, such as overall lower viscosity, low modulus after curing and stable mechanical properties after post- and/or heat-curing.

There is a limited number of reactive plasticizers known in the state of the art, for example EP1710280B1, which discloses monofunctional polyether polymers having an alkoxysilane group, prepared via the hydrosilylation of monools or by the functionalization of monools with isocyanatosilanes.

Furthermore, US8981030B2 discloses prepolymers comprising alkoxysilane groups, specifically alkoxysilyl polyurethanes obtained from polyoxyalkylene polyol with a number-average molecular weight Mₙ greater than 20'000 g/mol and have terminal unsaturation 0.02 meq/g and a polydispersity M_{w}/Mₙ of less than 1.5.

Another publication disclosing reactive plasticizers is JP525149382*.* In this publication, a curiable composition is disclosed, containing a polyoxyalkylene polymer A having between 1.2 and 4 reactive silanes per molecule 4.0 and having a number-average molecular weight Mₙ between 10'000 and 30'000 g/mol, wherein the reactive silane is a trialkoxysilane, and a polymer B having between 0.8 and 1.2 reactive silanes per molecule and having a number-average molecular weight Mₙ between 1'000 and 15'000 g/mol, wherein the reactive silane is a trialkoxysilane, with the restriction that Mₙ of B is smaller than that of A.

Another method for obtaining silane-functional reactive plasticizers based on polyether monools is disclosed in US6998459B2*.* In this disclosure, the reactive plasticizers are based on high molecular weight monools having number-average molecular weights Mₙ of between 3'000 and 12'000 g/mol. However, while such known reactive plasticizers improve the bleeding properties of the sealants, they commonly reduce the mechanical properties such as tear propagation resistance or tensile strength, and they adversely affect the application properties, for example by increasing the cut-off string length formed when the sealants are applied by a handgun.

Thus, it remains desirable to obtain a reactive plasticizer-containing sealant based on silane-terminated polymers that is easily applied by a handgun due to low necessary extrusion force and associated low viscosity, exhibits a low modulus after curing and shows stable mechanical properties over time and/or under influence of heat.

### Summary of the Invention

It is therefore an object of the present invention to provide curable silane-terminated polymer compositions containing reactive plasticizers, which manage to reduce or completely omit the necessary amount of common, in particular phthalate-based plasticizers, lower the necessary extrusion force and improve the mechanical and application properties of the sealant.

The intention in particular was to use reactive plasticizers based on monofunctional alkoxy silane-terminated polymers.

Thus, this type of reactive plasticizer can keep the sealant's viscosity low before curing and will still provide the desired flexibility after curing, because only one end of the polymeric reactive plasticizer can react with the silane-terminated polymers.

Surprisingly, it was also found that inventive composition shows improved stability upon heat treatment compared to state-of-the-art references.

The present invention achieves these aforementioned objectives with the features of independent claim 1.

The invention also relates to use of the curable composition according to the invention as a construction sealant. Furthermore, the invention relates to the use of the composition according to the invention as an industrial sealant or adhesive. Also, the invention relates to objects, in particular to buildings or a part of a building built with the curable composition.

Further aspects of the invention are the subject of further independent claims. Particularly preferred embodiments of the invention are the subject of the dependent claims.

### Ways of executing the invention

The present invention relates in a first aspect to a moisture curable composition comprising
- at least one organic polymer **P** having on average between 1.5 to 3 reactive silane groups selected from methyl dimethoxy silyl or triethoxy silyl;
- at least one reactive plasticizer **RP** having on average between 0.3 to 1.5 reactive silane groups selected from methyl dimethoxy silyl;
- at least one filler **F;**
- at least one catalyst **C.**

Substance names beginning with "poly", such as polyol or polyisocyanate, refer here to substances which formally contain per molecule two or more of the functional groups appearing in their name.

The term "organic polymer" encompasses a collective of macromolecules that are chemically homogeneous but differ in relation to degree of polymerization, molar mass and chain length, which has been prepared by a poly reaction (polymerization, polyaddition, polycondensation) and has a majority of carbon atoms in the polymer backbone, and reaction products of such a collective of macromolecules. Polymers having a polyorganosiloxane backbone (commonly referred to as "silicones") are not organic polymers in the context of the present document.

The term "silane" or "organosilane" refers to compounds which on the one hand have at least one, customarily two or three, hydrolyzable groups, preferably alkoxy groups or acyloxy groups, bonded directly to the silicon atom via Si-O bonds, and on the other hand have at least one organic radical bonded directly to the silicon atom via an Si-C bond. Silanes having alkoxy groups or acyloxy groups are also known to the person skilled in the art as organoalkoxy silanes and organoacyloxy silanes, respectively.

The term "radical" is used in this document in a formal sense, meaning a molecular rest bound to an atom by a covalent bond, while the bond is formally "cut" to describe the molecular rest attached to it.

Correspondingly, the term "silane group" identifies the silicon-containing group bonded to the organic radical of the silane, which is bonded by the Si-C bond to a compound. The silanes and their silane groups have the property of undergoing hydrolysis in the event of contact with moisture. This produces organosilanols, i.e., silicon-organic compounds containing one or more silanol groups (Si-OH groups) and, through subsequent condensation reactions, organosiloxanes, in other words silicon-organic compounds containing one or more siloxane groups (Si-O-Si groups).

In the present document, the term "reactive silane group" refers to a silyl group that is bonded to an organic radical and has up to three hydrolyzable substituents or hydroxyl groups on the silicon atom. Particularly useful hydrolyzable substituents are alkoxy groups. These silane groups are also referred to as "alkoxysilane groups". Reactive silane groups may also be in partly or fully hydrolyzed form, for example as silanols.

The term "silane-functional" identifies compounds which have silane groups. "Silane-functional polymers", accordingly, are polymers, more particularly organic polymers, which have at least one, preferably two or more, e.g., two, silane groups. The silane groups may take the form of side groups or preferably end groups. Silane-functional polymers are also referred to as silane-terminated polymers (STP). γ-silane-functional polymers are polymers in which the Si atom of the silane group is linked to the polymer via a 1,3-propylene bridge.

The term "monofunctional" refers to substances which formally contain on average per molecule between 0.3 to 1.5 of a specified functional group.

The sealants comprising the silane-functional polymer are moisture-curing, meaning that in the presence of water or moisture, more particularly atmospheric moisture the above-described hydrolysis and condensation reactions on the silane groups take place, causing crosslinking of the polymer molecules and curing of the sealant. The curing is also referred to as crosslinking.

Silane-terminated polymer compositions can be formulated as one-component or two-component compositions. One-component STP compositions have the advantage that they do not need to be mixed before or during application and are therefore more popular in many applications, and users of these processes appreciate the simpler and more error-resistant application of one-component STP adhesives and sealants. One-component STP compositions cure by reacting the reactive silane groups with moisture, usually atmospheric moisture, whereby curing takes place by diffusion of water from the outside to the inside of the applied adhesive or sealant.

A two-component STP composition refers to a composition in which the constituents of the composition are present in two different components which are stored in separate containers. Normally, the reactive species, i.e. organic polymer **P,** reactive plasticizer **RP,** are stored in the first component, and catalyst C or in some cases water is present in the second component. Only shortly before or during the application of the composition are the two components mixed with one another, whereupon the mixed composition cures under the action of moisture from air humidity and/or from the second component.

In the case of a two-component composition, it is still preferable to dry the filler **F** in the first component to ensure storage stability. The fillers **F** of the second component, however, do not have this restriction.

In preferred embodiments of the curable composition according to the present invention, the composition consists of one component.

"Aminosilanes", "isocyanatosilanes", and "mercaptosilanes" are organosilanes whose organic radical has at least one amino group, at least one isocyanate group, and at least one mercapto group, respectively. "Primary aminosilanes" are aminosilanes which have a primary amino group, i.e., an NH₂ group which is bonded to an organic radical. "Secondary aminosilanes" are aminosilanes which have a secondary amino group, i.e., an NH group which is bonded to two organic radicals.

"Polyoxyalkylene radical" refers to a linear or branched hydrocarbyl radical which contains ether groups and contains more than two repeat units of the (OR) type in succession, where R is a linear or branched alkylene radical, as for example from the polyaddition of ethylene oxide or 1 ,2-propylene oxide onto starter molecules having two active hydrogen atoms.

The term "polyether containing reactive silane groups" also encompasses organic polymers which contain silane groups and which, in addition to polyether units, may also contain urethane groups, urea groups or thiourethane groups. Such polyethers containing reactive silane groups may also be referred to as "polyurethanes containing reactive silane groups".

"Room temperature" refers here to a temperature of 23°C.

"Molecular weight" of oligomers or polymers is understood as the average molecular weight of their chain length distribution. "Average molecular weight" is understood herein to mean either the number-average molecular weight Mₙ of an oligomeric or polymeric mixture of molecules or radicals or the weight-average molecular weight M_{w} of an oligomeric or polymeric mixture of molecules or radicals. Both, number-average Mₙ and weight-average M_{w} are typically determined by means of gel permeation chromatography (GPC) against polystyrene as standard.

The polydispersity of a polymer can be established by a method known per se to the person skilled in the art, by determining both the number-average molecular weight (Mₙ) and the weight-average molecular weight (M_{w}) by gel permeation chromatography (GPC). The polydispersity is calculated as PD = M_{w}/Mₙ.

"Weight percent" or "percentage by weight", and its abbreviation "wt.-%" refer to the weight percentage of a certain compound in a total composition, if not otherwise defined. The terms "weight" and "mass" are used interchangeably in this document and refer to the mass as a property of a physical body and commonly measured in kilograms (kg).

"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.

A dotted line in the formulae in this document in each case represents the bond between a substituent and the corresponding molecular radical.

The term "does not contain polydiorganosiloxanes" means that no such compounds have been added during formulation of the composition. If traces of such species are unknowingly and/or unavoidably present, for example stemming from the synthesis of the silane-functional polymer or due to condensation reactions of silane-functional diorganosilane compounds possibly present in the composition, these are not considered as polydiorganosiloxanes in the meaning of this term. In simpler words, the term "does not contain polydiorganosiloxanes" means that no silicone oils or reactive silicone polymers, in particular polydimethylsiloxanes, were added during formulation of the composition.

"Overpaintability" describes the degree of ability of a material to withstand staining of the paint surface and delamination between material and paint after application of paint to the material's surface.

All industrial standards and norms cited in this document refer to the respective edition in force on the time of filing of the first application of this invention, if not otherwise defined.

The curable composition comprises at least one organic polymer P which has reactive silane groups of the formula (I) 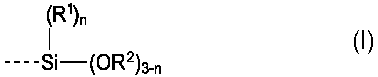
Wherein radical R¹ represents a linear or branched monovalent hydrocarbon radical having 1 to 4 carbon atoms and which optionally contains one or more C-C multiple bonds, and/or cycloaliphatic, and/or aromatic moieties;
Radical R² represents a linear or branched monovalent hydrocarbon radical having 1 to 5 carbon atoms and which optionally contains one or more C-C multiple bonds, and/or cycloaliphatic, and/or aromatic moieties;
n is 1 or 0.

The organic polymer **P** contains on average between 1.5 to 3 reactive silane-groups according to formula (I) per molecule. Thus, **P** is not monofunctional.

The reactive silane end groups of the organic polymer **P** are selected from alkoxysilanes, especially methyl dimethoxy silane or triethoxy silane.

In a preferred embodiment the organic polymer **P** is a γ-silane-terminated polymer.

Examples of suitable backbones for the silane-functional organic polymers **P** are polyethers, in particular polyoxyalkylenes, polyurethanes, including polyether-polyurethanes and polyester-polyurethanes, polyureas, including polyether-polyureas and polyester-polyureas, polyisocyanurates, polycarbodiimides and poly(meth)acrylates.

A particularly preferred backbone for the organic polymer **P** can be chosen from the list consisting of polyoxyethylene, polyoxypropylene or polyoxy-propylenepolyoxyethylene, polyurethane, poly(meth)acrylate or polybutadiene.

Especially preferred backbones for the organic polymer **P** can be chosen from the list consisting of polyoxyethylene, a polyoxypropylene, a polyoxy-propylenepolyoxyethylene.

Processes for preparing organic polymer **P** containing reactive silane groups are known to the person skilled in the art.

In a preferred process, organic polymers **P** containing reactive silane groups are obtainable from the reaction of organic polymers containing allyl groups with hydrosilanes, optionally with chain extension using, for example, diisocyanates.

In a further preferred process, organic polymers containing reactive silane groups are obtainable from the reaction of organic polyols with isocyanatosilanes, optionally with chain extension using diisocyanates.

In a further preferred process, polyethers containing reactive silane groups are obtainable from the reaction of organic polymers containing isocyanate groups, especially NCO-terminated urethane polymers from the reaction of polyols with a superstoichiometric amount of polyisocyanates, with organoalkoxysilanes such as aminosilanes, hydroxysilanes or mercaptosilanes. This process enables the use of a multitude of inexpensive starting materials of good commercial availability, by means of which it is possible to obtain different polymer properties, for example high extensibility, high strength, low modulus of elasticity, low glass transition point or high weathering resistance.

In one preferred embodiment the organic polymer **P** is a silane-functional polyurethane polymer which is obtainable by the reaction of a silane having at least one group that is reactive toward isocyanate groups with a polyurethane polymer which contains isocyanate groups. This reaction is carried out preferably in a stochiometric ratio of the groups that are reactive toward isocyanate groups to the isocyanate groups of 1:1, or with a slight excess of groups that are reactive toward isocyanate groups, and so the resulting silane-functional polyurethane polymer is entirely free from isocyanate groups.

In the reaction of the silane containing at least one group that is reactive toward isocyanate groups with a polyurethane polymer which contains isocyanate groups, the silane may in principle, albeit not preferably, be used in substochiometric quantities, to give a silane-functional polymer which contains both silane groups and isocyanate groups.

The silane which contains at least one group that is reactive toward isocyanate groups is, for example, a mercaptosilane or an aminosilane, more particularly an aminosilane.

Examples of suitable polyurethane polymer containing isocyanate groups for producing a silane-functional polyurethane organic polymer P are polymers obtainable by the reaction of at least one polyol with at least one polyisocyanate, more particularly a diisocyanate. This reaction may be accomplished by bringing the polyol and the polyisocyanate to reaction with customary methods, as for example from temperatures of 50°C to 100°C, optionally with accompanying use of suitable catalysts, the polyisocyanate being metered such that these isocyanate groups are in a stochiometric excess in relation to the hydroxyl groups of the polyol.

The excess of polyisocyanate is selected in particular such that the amount of free isocyanate groups present in the resulting polyurethane polymer after the reaction of all of the hydroxyl groups of the polyol is from 0.1 to 5 wt.-%, preferably 0.1 to 2.5 wt.-%, more preferably 0.2 to 1 wt.-%, based on the overall polymer.

Preferred polyurethane polymers are those having the stated amount of free isocyanate groups and obtained from the reaction of diisocyanates with high molecular mass diols in an NCO:OH ratio of 1.5:1 to 2.2:1.

Suitable polyols for preparing the polyurethane polymer are, in particular, polyether polyols, polyester polyols, and polycarbonate polyols, and also mixtures of these polyols. Particularly suitable are polyoxyethylene polyols and polyoxypropylene polyols, more particularly polyoxyethylene diols, polyoxypropylene diols, polyoxyethylene triols, and polyoxypropylene triols.

Especially suitable are polyoxyalkylene diols or polyoxyalkylene triols having a degree of unsaturation of less than 0.02 meq/g and having a number-average molecular weight Mₙ in the range from 1'000 to 30'000 g/mol, and also polyoxyethylene diols, polyoxyethylene triols, polyoxypropylene diols, and polyoxypropylene triols having an average molecular weight of 400 to 20'000 g/mol.

Likewise particularly suitable are so-called ethylene oxide-terminated ("EO-endcapped", ethylene oxide-endcapped) polyoxypropylene polyols. These stated polyols preferably have a number-average molecular weight Mₙ of 250 to 30'000 g/mol, more particularly of 1'000 to 30'000 g/mol, and an average OH functionality in the range from 1.6 to 3.

The proportion of the organic polymer **P** in the composition may vary within wide ranges. Preferably the organic polymer **P** is present in the composition in a proportion for example of 5 to 40 wt.-%, preferably of 10 to 30 wt.-%, more preferably of 10 to 25 wt.-%, based on the total weight of the composition.

Preferably, the organic polymer **P** has a weight-average molecular weight M_{w} of between 5'000 and 40'000 g/mol, more preferably between 10'000 and 30'000 g/mol, most preferably between 15'000 and 25'000 g/mol. The M_{w}/Mₙ of polymer **P** are between 1.1 and 2.8, more preferably between 1.2 to 2.5.

Preferably, the organic polymer **P** has a viscosity of less than 30 Pa s under standard climatic conditions.

The curable composition comprises at least one reactive plasticizer **RP** which has reactive silane groups of the formula (I) as described above. The reactive plasticizer **RP** contains on average between 0.3 to 1.5 reactive silane groups according to formula (I) per molecule. Thus, **RP** is monofunctional.

The reactive silane end groups of the reactive plasticizer **RP** are selected from alkoxysilanes, especially methyl dimethoxy silane.

Processes for preparing reactive plasticizer **RP** containing reactive silane groups are known to the person skilled in the art and correspond to the processes described for the preparation of organic polymer **P.** Commercially available reactive plasticizers with defined parameters described here can also be used. It goes without saying that in order to obtain the reactive plasticizer **RP** product containing on average between 0.3 to 1.5 reactive silane groups per molecule, the reactants and intermediates and other relevant reaction parameters have to be adjusted accordingly.

In a preferred embodiment the reactive plasticizer **RP** is a polymer product obtained by reacting 3-isocyanatopropyl methyldimethoxy silane with a monohydroxy-functional polyether.

Examples of suitable backbones for the silane-functional reactive plasticizer **RP** correspond to the suitable backbones listed for the organic polymer **P** above. Particularly preferred backbones for the reactive plasticizer **RP** can be chosen from the list consisting of polyoxyethylene, polyoxypropylene or polyoxypropylene-polyoxyethylene.

The proportion of the reactive plasticizer **RP** in the composition may vary within wide ranges. Preferably the reactive plasticizer **RP** is present in the composition in a proportion for example of 5 to 30 wt.-%, preferably of 10 to 30 wt.-%, more preferably of 10 to 25 wt.-%, based on the total weight of the composition.

Preferably, the reactive plasticizer **RP** has a weight-average molecular weight M_{w} of between 1'000 and 20'000 g/mol, more preferably between 3'000 and 15'000 g/mol, most preferably between 5'000 and 12'000 g/mol.

The M_{w}/Mₙ of the reactive plasticizer **RP** preferably is in the range of 1.1 to 2.8, more preferably between 1.2 to 2.5.

In a preferred embodiment, the weight ratio of the organic polymer **P** to the reactive plasticizer **RP** within the composition ranges from 16:1 to 1:4, preferably from 14:1 to 1:2, most preferably from 12:1 to 1:1.5

The curable composition according to the invention comprises at least one filler **F.** The filler **F** influences not only the rheological properties of the uncured composition but also the mechanical properties and the surface quality of the cured composition.

Examples of suitable fillers **F** are inorganic and organic fillers, examples being natural, ground or precipitated calcium carbonates, with or without a coating of fatty acids, especially stearic acid, barium sulfate (BaSO₄, also called barite or heavy spar), calcined kaolins, aluminum oxides, aluminum hydroxides, silicas, especially finely divided silicas from pyrolysis operations, carbon blacks, especially industrial carbon black, PVC powders or hollow beads. Preferred fillers are calcium carbonates, calcined kaolins, carbon black, finely divided silicas, and also flame-retardant fillers, such as hydroxides or hydrates, more particularly hydroxides or hydrates of aluminum, preferably aluminum hydroxide. It is entirely possible and may even be an advantage to use a mixture of different fillers. The filler **F** is preferably selected from calcium carbonate, most preferably from precipitated calcium carbonates (PCC) and/or from ground calcium carbonates (GCC).

The total amount of fillers **F** in the one-component moisture curable composition, where used, may vary within wide ranges, but is for example 10 to 80 wt.-%, preferably 20 to 75 wt.-%, most preferably 30 to 70 wt.-%, based on the overall composition.

The curable composition according to the invention comprises at least one catalyst **C,** known for this purpose to the person skilled in the art. Catalyst **C** is a curing catalyst for compositions based on silane-functional polymers and enables and/or facilitates hydrolysis and/or condensation of alkoxysilane groups. The catalyst is preferably a metal catalyst and/or basic nitrogen-containing and/or phosphorous-containing compound.

Suitable metal catalysts are especially compounds of tin, titanium, zirconium, aluminum or zinc, for example, organotitanates, organozirconates, and organoaluminates, such as diorganotin(IV) compounds such as, in particular, dibutyltin(IV) diacetate, dibutyltin(IV) dilaurate, dibutyltin(IV) dineodecanoate or dibutyltin(IV) bis(acetylacetonate) and dioctyltin(IV) dilaurate, tin(II) 2-ethylhexanoate and also titanium(IV) or zirconium(IV) or aluminum(III) or zinc(II) complexes, especially. The organotitanates, organozirconates, and organoaluminates preferably contain ligands selected from an alkoxy group, sulfonate group, carboxylate group, dialkyl phosphate group, dialkyl pyrophosphate group, and acetylacetonate group, it being possible for all the ligands to be identical or different from one another. An especially suitable metal-organic catalyst is dibutyltin dilaurate (DBTDL).

Suitable basic nitrogen-containing or phosphorus-containing compounds are especially imidazoles, pyridines, phosphazene bases or preferably amines, hexahydrotriazines, biguanides, guanidines or further amidines, such as for example 8-Diazabicyclo[5.4.0]undec-7-en (DBU). Examples for especially preferred basic nitrogen-containing compounds are alkyl amines, such as for example laurylamine, strearylamine, isophoronediamine, 1, or other alkyl amines.

Preferably, the composition according to the present invention comprises, based on the total composition, between 0.01 and 1 wt.-%, preferably between 0.05 and 0.5 wt.-%, most preferably between 0.1 and 0.3 wt.-% of a catalyst.

In a preferred embodiment, the curable composition comprises at least one additional component as an additive. Examples for such additives are thixotropic agents; plasticizers; solvents; fibers; dyes; pigments; mineral oils, adhesion promoters; drying agents; stabilizers to counter heat, hindered amine light stabilizers UV absorbers and antioxidants; flame retardants; surface-active substances such as wetting agents; flow control agents; deaerating agents or defoamers; biocides such as algicides, fungicides or fungal growth inhibitors; and also other substances customarily used in moisture-curing compositions. Preferably, the curable composition comprises at least one additional component selected from hindered amine light stabilizers, UV absorbers, antioxidants, pigments, drying agents, adhesion promoters, plasticizers, mineral oils, thixotropic agents.

Examples for thixotropic agents are urea compounds, polyamide waxes, bentonites or fumed silicas; organically modified castor oil and amide waxes or combinations thereof; or fatty acid amide-based substances. The organically modified castor oil may be, for example, a hydrogenated castor oil or another castor oil derivative.

Preferably, the composition according to the present invention comprises, based on the total composition, between 0 and 6 wt.-%, preferably between 0.1 and 4 wt.-%, most preferably between 0.5 and 2 wt.-% of thixotropic agent.

The conventional plasticizer may be any of the plasticizers commonly used in compositions based on silane-functional polymers. These include, for example, carboxylic esters such as phthalates, especially dioctyl phthalate, bis(2-ethylhexyl) phthalate, bis(3-propylheptyl) phthalate, diisononyl phthalate or diisodecyl phthalate, diesters of ortho-cyclohexane-dicarboxylic acid, especially diisononyl 1,2-cyclohexanedicarboxylate, adipates, especially dioctyl adipate, bis(2-ethylhexyl) adipate, azelates, especially bis(2-ethylhexyl) azelate, sebacates, especially bis(2-ethylhexyl) sebacate or diisononyl sebacate, glycol ethers, glycol esters, organic phosphoric or sulfonic esters, sulfonamides, polybutenes, or fatty acid methyl or ethyl esters derived from natural fats or oils, also called "biodiesel".

In preferred embodiments, the curable composition according to the invention contains below 10 wt.-%, preferably below 5 wt.-%, most preferably 0 wt.-% of phthalate-containing compounds based on the total weight of the composition.

Preferably, the composition according to the invention is free of any conventional plasticizer, especially phthalate-containing conventional plasticizers.

Examples for adhesion promoters are epoxy silanes, (meth)acrylosilanes, anhydridosilanes or adducts of the aforesaid silanes with primary aminosilanes, and also aminosilanes or urea silanes.

Preferably, the composition according to the present invention comprises, based on the total composition, between 0 and 5 wt.-%, preferably between 0.1 and 3 wt.-%, most preferably between 0.5 and 1 wt.-% of adhesion promoter.

Examples for drying agents are vinyltrimethoxy silane (VTMO), propyltrimethoxy silane (PTMO), γ-functiona! silanes such as N-(silylmethyl)-O-methyl carbamates, more particularly N-(methyldimethoxysilylmethyl)-O-methyl carbamate, (methacryloxymethyl)silanes, methoxymethylsilanes, N-phenyl-, N-cyclohexyl-, and N-alkylsilanes, orthoformic esters, calcium oxide or molecular sieves.

Preferably, the composition according to the present invention comprises, based on the total composition, between 0 and 6 wt.-%, preferably between 0.1 and 4 wt.-%, most preferably between 0.5 and 2 wt.-% of drying agent.

Examples for stabilizers are hindered amine light stabilizers (HALS), UV absorbers and antioxidants.

Preferably, the composition according to the present invention comprises, based on the total composition, between 0 and 5 wt.-%, preferably between 0.1 and 3 wt.-%, most preferably between 0.5 and 1 wt.-% of hindered amine light stabilizers.

Preferably, the composition according to the present invention comprises, based on the total composition, between 0 and 5 wt.-%, preferably between 0.1 and 3 wt.-%, most preferably between 0.5 and 1 wt.-% of UV absorbers.

Preferably, the composition according to the present invention comprises, based on the total composition, between 0 and 5 wt.-%, preferably between 0.1 and 3 wt.-%, most preferably between 0.5 and 1 wt.-% of antioxidants.

Examples for pigments and colorants are especially inorganic or organic pigments, in particular titanium dioxide, iron oxides and chromium oxides.

Preferably, the composition according to the present invention comprises, based on the total composition, between 0 and 5 wt.-%, preferably between 0.1 and 4 wt.-%, most preferably between 0.5 and 3 wt.-% of pigments.

Mineral oils are mixtures of higher alkanes from a mineral sources, particularly a distillate of petroleum, especially paraffin oils.

Preferably, the composition according to the present invention comprises, based on the total composition, between 0 and 20 wt.-%, preferably between 0.5 and 15 wt.-%, most preferably between1 and 10 wt.-% of mineral oil.

The curable composition according to the invention is especially suitable as construction sealant, more particularly as exterior facing sealant, more preferably as construction sealant of class 25 LM according to ISO 11600, and/or as sealant according to ASTM C719 class 50.

The curable composition according to the invention also relates to a construction sealant, characterized in that the construction sealant was being painted over, preferably with water-based or solvent-based paint.

The curable composition according to the invention is especially suitable as industrial sealant or adhesive, in particular for wing-body truck assembly and/or automobile interior parts.

In one particularly preferred embodiment, the curable composition according to the invention comprises
- 5 - 40 wt.-% of organic polymer **P;**
- 5 - 30 wt.-% of reactive plasticizer **RP;**
- 30 - 70 wt.-% of filler **F;**
- 0.01 - 0.1 wt.-% of catalyst **C.**

On application of the sealant of the invention, the silane groups present in the sealant come into contact with moisture. One feature of the silane groups is that they undergo hydrolysis on contact with moisture. In this reaction, organosilanols (Si-OH groups) are formed and, through subsequent condensation reactions, organosiloxanes (Si-O-Si groups). As the outcome of these reactions, which may be accelerated through the use of catalysts, the sealant ultimately cures. This process is also referred to as crosslinking.

The composition is preferably produced and stored with exclusion of moisture. Typically, it is storage-stable with exclusion of moisture in a suitable package or arrangement, such as, more particularly, a bottle, a canister, a pouch, a bucket, a vat or a cartridge.

Either the water needed for curing may come from the air (atmospheric moisture), or else the sealant may be brought into contact with a water-containing component, this contact being brought about, for example, by spreading, using a smoothing means, for example, or by spraying, or else the sealant may be admixed with a water-containing component at application, in the form of a water-containing paste, for example.

The sealant of the invention is suitable for example for application to concrete, mortar, brick, tile, plaster, natural stone such as granite or marble, glass, glass-ceramic, metal or metal alloy, wood, plastic, and paint; application to construction materials is especially preferred.

The sealant of the invention is applied preferably in a temperature range from 5 to 45°C and also cures under these conditions.

The invention further relates to the cured sealant which is obtainable from the sealant of the invention after curing thereof with water, more particularly in the form of atmospheric moisture.

The curable composition gives rise to an object which especially is a building or part of a building. This object is especially an object built by structural engineering or civil engineering, preferably a structure with exterior facings.

### Examples

Adduced hereinafter are working examples which are intended to elucidate the invention described in detail. It will be appreciated that the invention is not restricted to these described working examples. The term "standard climatic conditions" refers to a temperature of 23±1 °C and a relative air humidity of 50±5%.

### Test methods

The **extrusion force** was measured on a cartridge filled with formulated material using Zwick device from Zwick GmbH (measured after 1 day of production, 3mm orifice at 23°C). it is the force required to extrude the material through a define orifice at a speed of 60mm/min. The value of the extrusion force directly corresponds to the applicability by handgun and is an indicator for the viscosity of the composition. The lower the extrusion force, the easier is an application by hand, which is desired in sealants.

The **Shore A** hardness was determined according to DIN 53505 on samples with a layer thickness of 6 mm, cured for 7 days at 23°C.

The **modulus of elasticity** at 0-100% elongation were determined according to DIN 53504 (tensile speed: 200 mm/min) on films with a layer thickness of 2 mm, on a first set of samples cured for 7 days at 23°C then for 7 days at 50°C. A second set of samples was cured for 7 days at 23°C, then for 7 days at 50°C and then for 14 days at 90°C.

The **change of modulus** was calculated as the deviation in percentages from the values of the modulus of elasticity from the first set of samples and the second set of samples. This value allows assessment of heat stability and/or artificial ageing. The smaller the change of modulus, the higher the heat stability of the material and/or the long-time performance, as heat treatment in the second set of samples provides a simulation of material ageing.

### Synthesis of polymer P1

Under exclusion of moisture, 1000 g polyol Acclaim^{®} 12200 (from Covestro; low monool polyoxypropylene diol, OH number 11.0 mg KOH/g, water content approx. 0.02 wt. %), 35.2 g isophorone diisocyanate (Vestanat^{®} IPDI from Evonik Industries), 122.5 g diisodecyl phthalate and 0.12 g dibutyltin dilaurate were heated to 90°C with constant stirring and left at this temperature until the titrimetrically determined content of free isocyanate groups had reached a value of 0.39 % by weight.

Subsequently, 36.9 g of N-(3-trimethoxysilylpropyl)aminosuccinic acid diethyl ester was mixed in and the mixture was stirred at 90°C until no more free isocyanate was detected by FT-IR spectroscopy. The silane-functional polymer was cooled to room temperature and stored in the absence of moisture.

### Synthesis of polymer P2

In a reaction vessel, 2460g Polyol (Preminol S-4015, OHV 7.5 mg KOH/g), 68g 3-isocyanatopropyl methyl dimethoxysilane were mixed and the temperature was elevated until 70°C. Then, 2.0g of Bismuth catalyst solution (active ingredient of Bismuth neodecanoate 35%) was added and the reaction was continued for 5 hours to result in a clear viscous liquid. Progress of the reaction was probed by monitoring the concentration of NCO content by titration method.

### Synthesis of polymer P3

In a reaction vessel, 2500g Polyol (Preminol S-4015, OHV 7.5 mg KOH/g), 90g 3-isocyanatopropyl triethoxysilane were mixed and the temperature was elevated until 70°C. Then, 2.1g of Bismuth catalyst solution (active ingredient of Bismuth neodecanoate 35%) was added and the reaction was continued for 5 hours to result in a clear viscous liquid. Progress of the reaction was probed by monitoring the concentration of NCO content by titration method.

### Synthesis of reactive plasticizer RP1

In a reaction vessel, 2500g Newpol LB-3000 (from Sanyokasei, Co.Ltd., OHV=18.2 mgKOH/g), 165g 3-isocyanatopropyl methyldimethoxysilane were mixed and the temperature was elevated until 70°C. Then, 1.9g of Bismuth catalyst solution (active ingredient of Bismuth neodecanoate 35%) was added and the reaction was continued for 5 hours to result in a translucent liquid.

### Synthesis of reactive plasticizer RP2

In a reaction vessel, 226g Newpol-625 (from from Sanyokasei, Co.Ltd., OHV=29.9mgKOH/g), 35g Desmodur N 3300 (from Covestro, NCO: 21.8wt%) were mixed and the temperature was elevated until 70°C. Then, 0.22g of Bismuth catalyst solution (active ingredient of Bismuth neodecanoate 35%) was added and the reaction was continued until the NCO concentration was ca. 0.97wt%. Successively, 10.9g 3-mercaptopropyl methyldimethoxysilane (KBM-802 from Shin-Etsu Chemical, Co. Ltd.) was added and the solution was stirred for 3 days. A translucent liquid was obtained.

### Synthesis of reactive plasticizer RP3

In a reaction vessel, 324g Newpol-625 (from Sanyokasei, Co.Ltd., OHV= 29.9mgKOH/g), 50g Desmodur N 3300 (from Covestro, NCO: 21.8wt%) were mixed and the temperature was elevated until 70°C. Then, 0.33g of Bismuth catalyst solution (active ingredient of Bismuth neodecanoate 35%) was added and the reaction was continued until the NCO concentration was ca. 0.97wt%. Successively, 41.5g *sec*-amine BKF (Michael adduct of equal molar of N-2-aminoethyl-3-aminopropylmethyldimethoxysilane and diethyl maleate, prepared in advanced) was added to consume the remaining NCO. A translucent liquid was obtained.

### Compounds used in Compositions

**Table 1: Compounds used for the example compositions.**

| **Name** | **Description** | **Trade name** |
|---|---|---|
| Polymer **P-0** | M_{w} = 26'000 g/mol; M_{w}/Mₙ = 1.7 methyl dimethoxy silane end group; | Kaneka S-227 |
| Polymer **P-1** | M_{w} = 50'000 g/mol; M_{w}/Mₙ = 2.8 Trimethoxy silane end group. | See synthesis above |
| Polymer **P-2** | M_{w} = 19'000 g/mol; M_{w}/Mₙ = 1.3 methyl dimethoxy silane end group. | See synthesis above |
| Polymer **P-3** | M_{w} = 24'000 g/mol; M_{w}/Mₙ = 1.5 triethoxy silane end group. | See synthesis above |
| Reactive Plasticizer **RP-0** | M_{w} = 10'970 g/mol; M_{w}/Mₙ = 2.2 Methyl dimethoxy silane end group. | Kaneka Sat-145 |
| Reactive Plasticizer **RP-1** | M_{w} =6'000 g/mol; M_{w}/Mₙ = 1.5 Methyl dimethoxy silane end group. | See synthesis above |
| Reactive Plasticizer **RP-2** | M_{w} = 9'000 g/mol; M_{w}/Mₙ = 1.8 methyl dimethoxy silane end group. | See synthesis above |
| Reactive Plasticizer **RP-3** | M_{w}=9'800 g/mol; M_{w}/Mₙ = 2.1 methyl dimethoxy silane end group. | See synthesis above |
| Filler **F-1** | coated PCC, 80 nm | Hakuenka CCR-B |
| Filler **F-2** | GCC, 4.4 um | N-N-500 |
| Plasticizer **PL-1** | polyether polyol triol | Carpol GP-4000 |
| Plasticizer **PL-2** | diisodecyl phthalate | Jayflex DIDP |
| Catalyst | dibutyl oxide tin | MS-CAT-01 |
| Thixotropic agent | fatty acid amide based | ASAT-1800 |
| Pigment | Titanium oxide | TCR-50 |
| Drying agent | vinyl trimethoxy silane | Silquest A-171 |

### Compositions used in material tests

Comparative examples, characterized in that the compositions contain either a commercial, state-of-the-art STP polymer with methyl dimethoxy silane end groups and reactive plasticizer **(E1)** or a state-of-the-art STP with trimethoxy silane end groups and reactive plasticizer **(E2)** or an inventive organic polymer but no reactive plasticizer **(E3),** are identified in tables 2 to 3 by "(Ref.)".

**Table 2: Compositions used in material tests. Values are in wt.-% totaling 100%.**

| **Example compositions** | **E1** (Ref.) | **E2** (Ref.) | **E3** (Ref.) | **E4** | **E5** | **E6** | **E7** | **E8** | **E9** |
|---|---|---|---|---|---|---|---|---|---|
| **P-0** | 20 | - | - | - | - | - | - | - | - |
| **P-1** | - | 20 | - | - | - | - | - | - | - |
| **P-2** | - | - | 30 | 20 | 15 | 10 | 20 | 25 | - |
| **P-3** | - | - | - | - | - | - | - | - | 20 |
| **RP-0** | - | - | - | - | - | - | - | - | 10 |
| **RP-1** | - | 10 | - | 10 | 15 | 20 | - | - | - |
| **RP-2** | - | - | - | - | - | - | 10 | - | - |
| **RP-3** | 10 | - | - | - | - | - | - | 5 | - |
| **F-1** | 25 | 25 | 25 | 25 | 25 | 25 | 25 | 25 | 25 |
| **F-2** | 25 | 25 | 25 | 25 | 25 | 25 | 25 | 25 | 25 |
| **PL-1** | 9 | - | 9 | 9 | 9 | 9 | 9 | 9 | 9 |
| **PL-2** | 6 | 15 | 6 | 6 | 6 | 6 | 6 | 6 | 6 |
| **Catalyst** | 0.3 | 0.3 | 0.3 | 0.3 | 0.3 | 0.3 | 0.3 | 0.3 | 0.3 |
| **Thixotropic agent** | 1.3 | 1.3 | 1.3 | 1.3 | 1.3 | 1.3 | 1.3 | 1.3 | 1.3 |
| **Pigment** | 2 | 2 | 2 | 2 | 2 | 2 | 2 | 2 | 2 |
| **Drying agent** | 1.4 | 1.4 | 1.4 | 1.4 | 1.4 | 1.4 | 1.4 | 1.4 | 1.4 |

### Material Tests

**E4** to **E9** have lower extrusion force than **E1** to **E3** (Ref.), which corresponds to easier applicability.

**E4** to **E9** have lower hardness than **E2** to **E3** (Ref.). However, **E1** has a very low Shore A hardness and is hardly suitable as sealant material. Optimal shore A hardness for use as a sealant typically lays between 10 to 20.

**E4** to **E9** have a lower modulus than **E1** to **E3** (Ref.)

**E4** to **E9** have a lower change of modulus upon heat treatment than **E1** to **E3** (Ref.). Here, **E1** is the most striking example and exhibits poor heat stability.

**Table 3: Material Tests**

| **Test results** | | **E1** (Ref.) | **E2** (Ref.) | **E3** (Ref.) | **E4** | **E5** | **E6** | **E7** | **E8** | **E9** |
|---|---|---|---|---|---|---|---|---|---|---|
| Extrusion force (N) | Fresh, 3mm at 23°C | 433 | 477 | 499 | 390 | 349 | 301 | 377 | 433 | 265 |
| Shore A | 7d at 23°C | 6 | 25 | 24 | 13 | 10 | 12 | 16 | 20 | 10 |
| Modulus of elasticity 0-100% (MPa) | 7d at 23°C + 7d at 50°C | 0.11 | 0.58 | 0.39 | 0.24 | 0.18 | 0.31 | 0.32 | 0.32 | 0.17 |
| | 7d at 23°C + 7d at 50°C + 14d at 90°C | 0.18 | 0.51 | 0.29 | 0.22 | 0.18 | 0.34 | 0.33 | 0.29 | 0.16 |
| Change in Modulus (%) | | 64 | -12 | -25 | -8 | 0 | 10 | 3 | -9 | -6 |

## Claims

1. A moisture curable composition comprising
- at least one organic polymer **P** having on average between 1.5 to 3 reactive silane groups selected from methyl dimethoxy silyl or triethoxy silyl;
- at least one reactive plasticizer **RP** having on average between 0.3 to 1.5 reactive silane groups selected from methyl dimethoxy silyl;
- at least one filler **F;**
- at least one catalyst **C.**

2. The curable composition according to claim 1, wherein the backbone of the organic polymer **P** is a polyether, in particular a polyoxyalkylene, a polyurethane, a polyether-polyurethane, a poly(meth)acrylate or a polybutadiene, preferably a polyoxyethylene, a polyoxypropylene, a polyoxypropylene-polyoxyethylene.

3. The curable composition according to claims 1 to 2, wherein the organic polymer **P** has a weight-average molecular weight M_{w} of between 5'000 and 40'000 g/mol, more preferably between 10'000 and 30'000 g/mol, most preferably between 15'000 and 25'000 g/mol.

4. The curable composition according to claims 1 to 3, wherein the organic polymer **P** has an average viscosity of less than 30 Pa s under standard climatic conditions.

5. The curable composition according to claims 1 to 4, wherein the backbone of the reactive plasticizer **RP** is polyether, in particular a polyoxyethylene, polyoxypropylene or polyoxypropylene-polyoxyethylene.

6. The curable composition according to claims 1 to 5, wherein the reactive plasticizer **RP** has a weight-average molecular weight M_{w} of between 1'000 and 20'000 g/mol, more preferably between 3'000 and 15'000 g/mol, most preferably between 5'000 and 12'000 g/mol.

7. The curable composition according to claims 1 to 6, wherein the weight ratio of the organic polymer **P** to the reactive plasticizer **RP** within the composition ranges from 16:1 to 1:4, preferably from 14:1 to 1:2, most preferably from 12:1 to 1:1.5

8. The curable composition according to claims 1 to 7, wherein the filler **F** consists or comprises of calcium carbonate, preferably ground calcium carbonate and/or precipitated calcium carbonate,

9. The curable composition according to claims 1 to 8, wherein the composition comprises at least one additional component selected from hindered amine light stabilizers, UV absorbers, antioxidants, pigments, drying agents, adhesion promoters, plasticizers, mineral oils, thixotropic agents.

10. The curable composition according to claims 1 to 9, **characterized in that** the sealant contains below 10 wt.-%, preferably below 5 wt.-%, most preferably 0 wt.-% of phthalate-containing compounds based on the total weight of the composition.

11. Use of a curable composition according to claims 1 to 10 as construction sealant, more particularly as exterior facing sealant, more preferably as construction sealant of class 25 LM according to ISO 11600, and/or as sealant according to ASTM C719 class 50.

12. Use of a curable composition according to claims 1 to 10 as an construction sealant **characterized in that** the construction sealant is being painted over, preferably with water-based or solvent-based paint.

13. Use of a curable composition according to claims 1 to 10 as industrial sealant or adhesive, in particular for wing-body truck assembly and/or automobile interior parts.

14. An object, in particular a building or a part of a building, built with a curable composition according to claims 1 to 10.

15. The curable composition, according to claims 1 to 10 **characterized in that** said composition comprises, based on the total weight of the composition,
- 5 - 40 wt.-% of organic polymer **P;**
- 5 - 30 wt.-% of reactive plasticizer **RP;**
- 30 - 70 wt.-% of filler **F;**
- 0.01 - 0.1 wt.-% of catalyst **C.**
